# EUROPEAN PATENT SPECIFICATION

(11) **EP 1 718 718 B1**
(45) Date of publication and mention of the grant of the patent: **23.07.2008**
(21) Application number: 05717813.9
(22) Date of filing: 28.02.2005
(51) Int. Cl.: C10G 31/08

(54) **SOAP CONTROL AGENT**
SEIFENBEKÄMPFUNGSMITTEL
AGENT D'ELIMINATION DU SAVON

(30) Priority: 28.02.2004 GB 0404481
(43) Date of publication of application: 08.11.2006
(73) Proprietor: Rhodia UK Limited, Watford, Hertfordshire WD24 4QP (GB)
(72) Inventor: JONES, Christopher Raymond, South Staffordshire WS6 7BS (GB)
(74) Representative: Seugnet, Jean Louis
(86) International application number: PCT/GB2005/000733
(87) International publication number: WO 2005/085392

(56) References cited:
- US-A- 3 966 630
- US-A- 4 886 617

## Description

This invention relates to the use of phosphonated polymers as naphthenate and carboxylate salt control agents and the method of use of such agents.

Crude oil invariably contains naphthenic and carboxylic/fatty acids in varying amounts dependent upon the source of the crude oil.

When crude oil contacts an aqueous phase, for example reservoir water, it is possible for metal salts of naphthenic and fatty acids to be formed. The metal ions in the aqueous phase can react with carboxylic groups on the acids to form salts (these are typically referred to as soaps).

These soaps can be very problematic during oil recovery and downstream processing. Typical problems include:
- the formation of oil water sludge and emulsions which hinder oil water separation processes;
- the formation of hard or waxy scales which cause retardation of fluid flow, block processing equipment and reduce the quality of the oil;
- soluble metal soaps remaining in the crude oil during the separation process and accordingly the crude oil contains residual levels of metal ions such as calcium, magnesium and iron;
- the presence of metal ions reducing the value of the crude oil; and
- the presence of metal ions also causing processing problems as soaps can deposit in preheat trains and decompose during resid conversion, hydroconversion or coking procedures.

Currently, naphthenate and carboxylate soap formation is treated by the addition of large volumes of acids such as acetic acid. However, this type of treatment suffers from volumes of acetic acid being needed and high corrosion rates that are experienced as a result of using acetic acid.

The present invention aims to ameliorate the above disadvantages by providing a non-corrosive treatment that can effectively control naphthenate and carboxylate soap formation during oil recovery and processing operations.

Accordingly, the present invention provides a soap control agent comprising a phosphorus containing polymer.

Further provided is the use of a phosphorus containing polymer, as a soap control agent, to control soap formation.

Also provided is the use of a phosphorus containing polymer in the manufacture of an agent to control soap formation.

The phosphorus containing polymer may have a phosphonate or phosphinate end cap. The end capped polymer may be of formula (I) :

X₂O₃PCHYCZ₂PO₂XR (I)

wherein X is H or an alkali metal, alkaline earth or other polyvalent metal, ammonium or an organic base, and R is a polymeric chain comprising between 1 and 100,000 groups, said group or groups being derived from at least 1 unsaturated compound in which the multiple bond is activated chemically by an adjacent electron withdrawing group, and Y and Z are each hydrogen, a PO₃A₂, SO₃A or CO₂A group wherein A is hydrogen or an alkyl or aryl moiety.

R is preferably a polymer of acrylic acid. Alternatively, R is a polymer of a carboxylic or sulphonic acid, e.g. methacrylic acid, maleic acid, vinyl sulphonic acid or 2-acrylamido-2-methylpropane sulphonic acid. R may also be a copolymer of VPA (vinyl phosphonic acid) and VDPA (vinyl diphosphonic acid).

The compound may exist either as a free acid or as its salt. The compounds are normally prepared and used in the form of water soluble salts. The compounds of formula (I) and methods for preparing them are set out in detail in European Patent No 0 861 846 of Rhodia Consumer Specialties Limited.

Alternatively, the phosphorus containing polymer may be a telomer of formula (III): 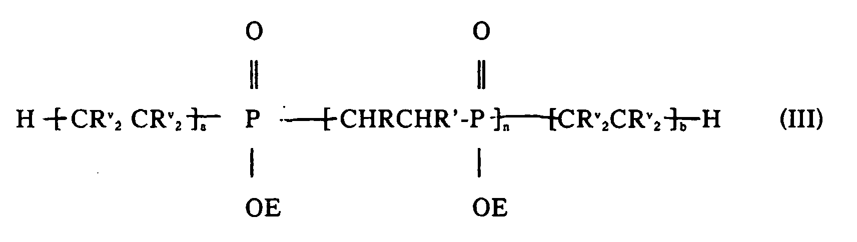 wherein E is hydrogen or a cation, R and R' are each independently selected from the group consisting of hydrogen, hydroxyl, carboxyl, alkyl, aryl, alkaryl, hydroxy-substituted alkyl, aryl or alkaryl and carboxy-substituted alkyl, aryl or alkaryl, provided that R and R' together have a total of less than 23 carbon atoms,
at least one R^{v} in each monomer unit is selected from the group consisting of hydroxy, carboxy, sulpho, phosphono, amido, aceto, aryl and halogen;
each other R^{v} is independently selected from the group consisting of hydrogen, C₁₋₄ alkyl, carboxyl, sulpho, phosphono, hydroxyl groups, carboxy-substituted, sulpho-substituted, phosphono-substituted and hydroxy-substituted C₁₋₄ alkyl groups;
(a + b) is in the range 5 to 200 and n is greater than 1.

The telomer of formula (III) is preferably produced by co-polymerising a polymer of formula II (below) with at least one monomer of formula CR₂^{v} = CR₂^{v}, wherein R^{v} has the same meaning as above.

Formula (II) is: 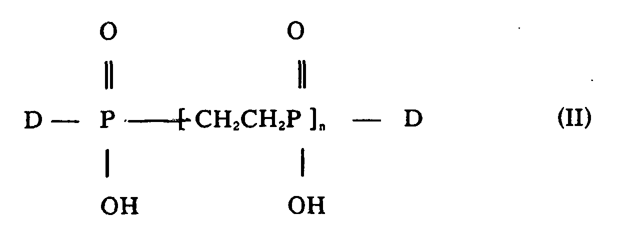 wherein D is hydrogen or a cation or an alkyl group and n is 1.05 to 100.

The present invention, in a further aspect, provides the use of a soap control agent as defined above to either remove metal ions from a medium or to inhibit the formation of problematic metal soaps.

The medium is preferably crude oil. Alternatively, the medium is a mixture, in any proportion, of hydrocarbons containing naphthenic or fatty acids with water. In particular, the water can be injection water, reservoir water (connate water) or water from oil fields, or any system where water contact or is in contact with crude oil or naphthenic acid or fatty acid containing fluids.

Furthermore, the medium can be selected from processed soaps and cleaning formulations as used in personal home care applications.

The present invention in a yet further aspect, provides a method of removing metal ions from a medium comprising contacting the medium with an effective amount of a phosphorus containing polymer as described above.

The medium is preferably crude oil. Alternatively, the medium is a mixture, in any proportion, of hydrocarbons containing naphthenic or fatty acids with water. In particular, the water can be injection water, reservoir (connate water) or produced water from oil fields, or any system water or in contact with crude oil or naphthenic acid or fatty acid containing fluids. Furthermore, the medium can be processed soaps and cleaning formulations as used in personal homecare applications.

The soap control agent is used in an effective amount of between 0.01 to 100,000ppm. Preferably the soap control agent is used in an effective amount of between 1 to 10,000ppm.

The soap is preferably selected from the group consisting of calcium naphthenate, sodium naphthenate, magnesium naphthenate, iron naphthenate, calcium carboxylate, magnesium carboxylate and iron carboxylate.

The metal ions are preferably selected from the group consisting of: Mg²⁺, Ca²⁺, Na⁺, Fe²⁺/Fe³⁺.

It will be appreciated that the use of the soap control agent according to the invention is not to be limited to soap control in crude oil. The soap control agent may be used in other areas where soap control is important, for example, laundry detergents and domestic cleaning products.

It is believed that the soap control agents work by sequestering metal ions. Once the metal ions have been sequestered, soap formation is inhibited. It is also believed that the polymers in accordance with the invention interact with soaps to destabilise them. This is, of course, a theory and should not be construed as being limiting or factual.

It is advantageous that the use of phosphonated polymers in accordance with the present invention controls soap formation with no emulsification of the oil-water systems.

The present invention will now be described, with reference to the following example.

### Example 1

Potential soap control agents were added to 70mls of a crude oil, previously characterised as containing 50ppm Ca, at a treatment level of 500ppm product. The treated crude oil was stored at 60°C for 2 hours. The crude oil was washed with 30mls of de-ionised water to remove any water-soluble calcium compounds -from the oil. The "washing" was processed to remove residual oil. The processed washings were then analysed for calcium content using ICPES (inductively coupled plasma emission spectroscopy).

Effective soap control agents will scavenge the calcium from the crude oil and migrate into the de-ionised water. Therefore, the efficacy of the soap control agent is directly proportional to the amount of calcium in the processed washings.

The results are summarised below:

| **Soap control agent evaluated Evaluated** | **ppm Calcium in deionised water after extraction** |
|---|---|
| Control (de-ionised water) | 14 |
| Long chain mono-phosphonic acid | 2 |
| Oil soluble phosphonocarboxylate | 5 |
| HEDP - conventional phosphonate | 6 |
| Long chain di-phosphonic acid | 6 |
| Dialkyl alkyl phosphonate | 11 |
| Short chain phosphonocarboxylate | 21 |
| Phosphonate end capped polymer I | 57 |
| Short chain phosphine oxide | 29 |
| Acetic acid | 32 |
| P-Block polymer | 60 |
| Phosphonate end capped polymer II | 61 |

This table shows that the novel phosphorus containing compounds (phosphonate end capped polymer I, P-block polymer and phosphonate end capped polymer II), in accordance with the invention, effectively decrease the amount of metal ions in crude oil and thereby inhibit soap formation and alleviate the problems associated with soaps in crude oil.

## Claims

1. Use of a phosphorus containing polymer to control metal soap formation, in which said polymer is:
- An end cap polymer is of formula (I):
X₂O₃PCHYCZ₂PO₂XR (I)
wherein X is H or an alkali metal, alkaline earth or other polyvalent metal, ammonium or an organic base, and R is a polymeric chain comprising between I and 100,000 groups, said group or groups being derived from at least 1 unsaturated compound in which the multiple bond is activated chemically by an adjacent electron withdrawing group, and Y and Z are each hydrogen, a PO₃A₂, SO₃A or CO₂A group wherein A is hydrogen or an alkyl or aryl moiety.
Or
- a telomer of formula (III): 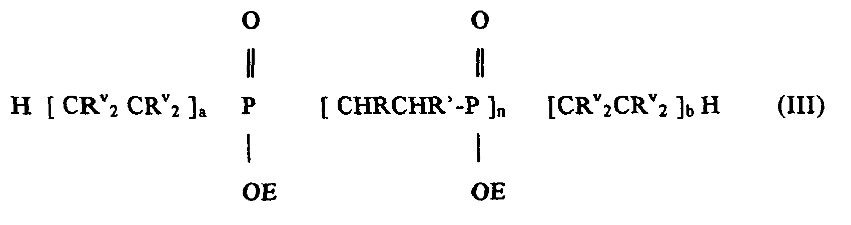
wherein E is hydrogen or a cation, R and R' are each independently selected from the group consisting of hydrogen, hydroxyl, carboxyl, alkyl, aryl, alkaryl, hydroxy-substituted alkyl, aryl or alkaryl and carboxy-substituted alkyl, aryl or alkaryl, provided that R and R' together have a total of less than 23 carbon atoms, at least one R^{v} in each monomer unit is selected from the group consisting of hydroxy, carboxy, sulpho, phosphono, amido, aceto, aryl and halogen;
each other R^{v} is independently selected from the group consisting of hydrogen, C₁₋₄ alkyl, carboxyl, sulpho, phosphono, hydroxyl groups, carboxy-substituted, sulpho-substituted, phosphono-substituted and hydroxy-substituted C₁₋₄ alkyl groups;
(a+b) is in the range 5 to 200 and n is greater than 1.

2. Use as claimed in claim 1 in which R is a polymer of acrylic acid.

3. Use as claimed in claim 1 in which R is a polymer of a carboxylic or sulphonic acid selected from the group consisting of methacrylic acid, maleic acid, vinyl sulphonic acid and 2-acrylamido-2-methylpropane sulphonic acid.

4. Use as claimed in claim 1 in which R is copolymer of VPA (vinyl phosphonic acid) and VDPA (vinyl diphosphonic acid).

5. Use as claimed in claim 1 in which the telomer of formula (III) is produced by co-polymerising a polymer of formula II with at least one monomer of formula CR₂^{v}=CR₂^{v}, wherein R^{v} has the same meaning as in claim 7 and wherein formula (II) is: 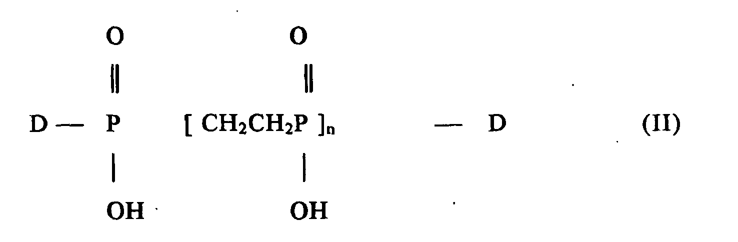 wherein D is hydrogen or a cation or an alkyl group and n is 1.05 to 100.

6. Use of a soap control agent as claimed in any of claims 1 to 5 wherein the use is to remove metal ions from a medium.

7. Use as claimed in claim 6 in which the medium is crude oil.

8. Use as claimed in claim 7 in which the medium is a mixture, in any proportion, of hydrocarbons containing naphthenic or fatty acids with water.

9. Use as claimed in claim 8 in which the water is injection water, reservoir water (connate water) water from oil fields, or water from any system where water contacts or is in contact with crude oil or naphthenic acid or fatty acid containing fluids.

10. Use as claimed in claim 6 in which the medium is selected from process soaps and cleaning formulations used in personal home care applications.

11. Use as claimed in any one of claims 6 to 10 in which the metal ions are selected from Mg²⁺, Ca²⁺, Na⁺, Fe²⁺/Fe³⁺.

12. A method of removing metal ions from a medium comprising contacting the medium with an effective amount of a phosphorus containing polymer according any one of claims 1 to 5.

## Patentansprüche

1. Verwendung eines Phosphor-enthaltenden Polymers zur Kontrolle der Metallseifenbildung, wobei das Polymer ein endgruppengeschütztes Polymer der Formel (I):
X₂O₃PCHYCZ₂PO₂XR (I),
worin X H oder ein Alkalimetall, Erdalkali- oder anderes mehrwertiges Metall, Ammonium oder eine organische Base ist und R eine Polymerkette ist, die zwischen 1 und 100.000 Gruppen umfaßt, wobei die Gruppe oder Gruppen von mindestens 1 ungesättigten Verbindung abgeleitet ist/sind, in der die Mehrfachbindung chemisch durch eine nachbarständige elektronenziehende Gruppe aktiviert ist, und Y und Z jeweils Wasserstoff, eine PO₃A₂-, eine SO₃A-oder eine CO₂A-Gruppe sind, worin A Wasserstoff oder eine Alkyl- oder Arylkomponente ist;
oder
ein Telomer der Formel (III): 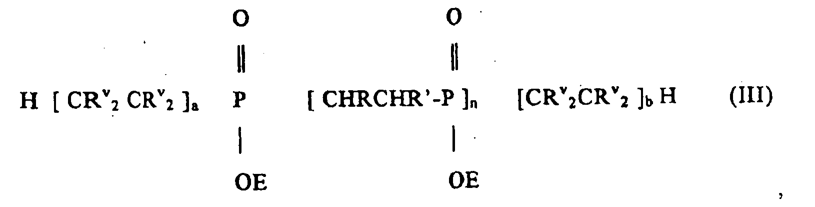 worin E Wasserstoff oder ein Kation ist, R und R' jeweils unabhängig voneinander aus der Gruppe ausgewählt sind, bestehend aus Wasserstoff, Hydroxyl, Carboxyl, Alkyl, Aryl, Alkaryl, Hydroxy-substituiertem Alkyl, Aryl oder Alkaryl und Carboxy-substituiertem Alkyl, Aryl oder Alkaryl, mit der Maßgabe, daß R und R' zusammen insgesamt weniger als 23 Kohlenstoffatome aufweisen, mindestens ein R^{v} in jeder Monomereinheit aus der Gruppe ausgewählt ist, bestehend aus Hydroxy, Carboxy, Sulfo, Phosphono, Amido, Aceto, Aryl und Halogen; jeder andere R^{v} unabhängig aus der Gruppe ausgewählt ist, bestehend aus Wasserstoff, C₁₋₄-Alkyl-, Carboxyl-, Sulfo-, Phosphono-, Hydroxyl-Gruppen, Carboxy-substituierten, Sulfosubstituierten, Phosphono-substituierten und Hydroxy-substituierten C₁₋₄-Alkyl-Gruppen; (a + b) im Bereich von 5 bis 200 liegt und n größer als 1 ist,
ist.

2. Verwendung nach Anspruch 1, wobei R ein Polymer von Acrylsäure ist.

3. Verwendung nach Anspruch 1, wobei R ein Polymer einer Carbon- oder Sulfonsäure, ausgewählt aus der Gruppe, bestehend aus Methacrylsäure, Maleinsäure, Vinylsulfonsäure und 2-Acrylamido-2-methylpropansulfonsäure, ist.

4. Verwendung nach Anspruch 1, wobei R ein Copolymer von VPA (Vinylphosphonsäure) und VDPA (Vinyldiphosphonsäure) ist.

5. Verwendung nach Anspruch 1, wobei das Telomer der Formel (III) durch Copolymerisierung eines Polymers der Formel II mit mindestens einem Monomer der Formel CR₂^{v}=CR₂^{v}, worin R^{v} dieselbe Bedeutung hat wie in Anspruch 7 und worin Formel (II): 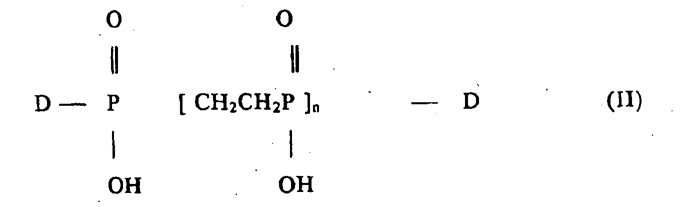 ist, worin D Wasserstoff oder ein Kation oder eine Alkylgruppe ist und n 1,05 bis 100 ist, hergestellt wird.

6. Verwendung eines Seifenkontrollmittels nach einem der Ansprüche 1 bis 5, wobei die Verwendung die Entfernung von Metallionen aus einem Medium ist.

7. Verwendung nach Anspruch 6, wobei das Medium Rohöl ist.

8. Verwendung nach Anspruch 7, wobei das Medium ein Gemisch von Kohlenwasserstoffen, die Naphthen- oder Fettsäuren enthalten, mit Wasser in irgendeinem Anteil ist.

9. Verwendung nach Anspruch 8, wobei das Wasser Injektionswasser, Speicherwasser (fossiles Wasser), Wasser von Ölfeldern oder Wasser aus irgendeinem System, wo Wasser Rohöl oder Naphthensäure- oder Fettsäure-enthaltende Fluide kontaktiert oder damit in Kontakt steht, ist.

10. Verwendung nach Anspruch 6, wobei das Medium aus Prozeßseifen und Reinigungsformulierungen, die in privaten Heimpflegeanwendungen verwendet werden, ausgewählt ist.

11. Verwendung nach einem der Ansprüche 6 bis 10, wobei die Metallionen aus Mg²⁺, Ca²⁺, Na⁺, Fe²⁺/Fe³⁺ ausgewählt sind.

12. Verfahren zur Entfernung von Metallionen aus einem Medium, umfassend das Kontaktieren des Mediums mit einer wirksamen Menge eines Phosphor-enthaltenden Polymers nach einem der Ansprüche 1 bis 5.

## Revendications

1. Utilisation d'un polymère phosphoré pour supprimer la formation de savon métallique, dans laquelle ledit polymère est :
- un polymère à coiffage terminal de formule (I) :
X₂O₃PCHYCZ₂PO₂XR (I)
dans laquelle X est un atome d'hydrogène ou un métal alcalin, un métal alcalino-terreux ou un autre métal polyvalent, un ammonium ou une base organique, et R est une chaîne polymère renfermant de 1 à 100 000 groupes, ledit groupe
ou lesdits groupes étant dérivé(s) d'au moins 1 composé insaturé dans lequel la liaison multiple est activée chimiquement par un groupe électro-attracteur adjacent, et Y et Z sont chacun un atome d'hydrogène, un groupe PO₃A₂, un groupe SO₃A ou un groupe CO₂A dans lequel A est un atome d'hydrogène ou un fragment alkyle ou aryle,
ou
- un télomère de formule (III) : 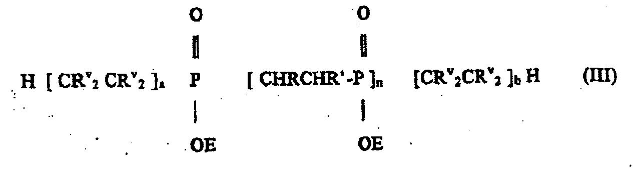
dans laquelle E est un atome d'hydrogène ou un cation, R et R' sont choisis, chacun indépendamment, parmi le groupe constitué d'un atome d'hydrogène, d'un groupe hydroxyle, d'un groupe carboxyle, d'un groupe alkyle, d'un groupe aryle, d'un groupe alkaryle, d'un groupe alkyle, aryle ou alkaryle hydroxy-substitué et d'un groupe alkyle, aryle ou alkaryle carboxy-substitué, à condition que R et R' renferment conjointement un total de moins de 23 atomes de carbone, au moins un R^{v} dans chaque motif monomère est choisi parmi le groupe constitué d'un groupe hydroxy, d'un groupe carboxy, d'un groupe sulfo, d'un groupe phosphono, d'un groupe amido, d'un groupe acéto, d'un groupe aryle et d'un atome d'halogène ;
chaque autre groupe R^{v} est choisi indépendamment parmi le groupe constitué d'un atome d'hydrogène, d'un groupe alkyle en C₁₋₄, d'un groupe carboxyle, d'un groupe sulfo, d'un groupe phosphono, d'un groupe hydroxyle, et de groupes alkyle en C₁₋₄ carboxy-substitués, sulfo-substitués, phosphono-substitués et hydroxy-substitués ;
(a+b) est dans la plage de 5 à 200 et n est supérieur à 1.

2. Utilisation selon la revendication 1, dans laquelle R est un polymère de l'acide acrylique.

3. Utilisation selon la revendication 1, dans laquelle R est un polymère d'un acide carboxylique ou sulfonique choisi parmi le groupe constitué de l'acide méthacrylique, de l'acide maléique, de l'acide vinylsulfonique et de l'acide 2-acrylamido-2-méthylpropane-sulfonique.

4. Utilisation selon la revendication 1, dans laquelle R est un copolymère du VPA (acide vinylphosphonique) et du VDPA (acide vinyldiphosphonique).

5. Utilisation selon la revendication 1, dans laquelle le télomère de formule (III) est produit par co-polymérisation d'un polymère de formule II avec au moins un monomère de formule CR₂^{v}=CR₂^{v}, dans laquelle R^{v} présente la même signification que dans la revendication 7 et où la formule (II) est : 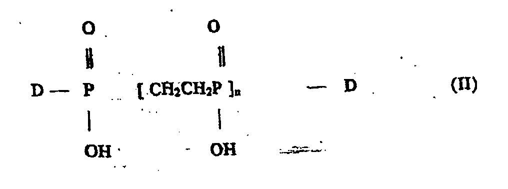 dans laquelle D est un atome d'hydrogène ou un cation ou un groupe alkyle; et n vaut de 1,05 à 100.

6. Utilisation d'un agent d'élimination du savon selon l'une quelconque des revendications 1 à 5, où l'utilisation est destinée à éliminer les ions métalliques d'un milieu.

7. Utilisation selon la revendication 6, dans laquelle le milieu est du pétrole brut.

8. Utilisation selon la revendication 7, dans laquelle le milieu est un mélange, en une proportion quelconque, d'hydrocarbures comprenant des acides naphténiques ou gras avec de l'eau.

9. Utilisation selon la revendication 8, dans laquelle l'eau est de l'eau d'injection, de l'eau de réservoir (eau connée) issue de champs pétrolifères, ou de l'eau issue d'un système dans lequel l'eau entre en contact ou est en contact avec des fluides contenant du pétrole brut ou des acides naphténiques ou des acides gras.

10. Utilisation selon la revendication 6, dans laquelle le milieu est choisi parmi des savons de traitement et des formulations nettoyantes utilisées dans des applications personnelles de soins ménagés.

11. Utilisation selon l'une quelconque des revendications 6 à 10, dans laquelle les ions métalliques sont choisis parmi Mg²⁺, Ca²⁺, Na⁺, Fe²⁺/Fe³⁺.

12. Procédé d'élimination des ions métalliques d'un milieu, comprenant la mise en contact du milieu avec une quantité efficace d'un polymère phosphoré selon l'une quelconque des revendications 1 à 5.
